# EUROPEAN PATENT APPLICATION

(11) **EP 3 613 871 A1**
(43) Date of publication of application: **26.02.2020**
(21) Application number: 18190391.5
(22) Date of filing: 23.08.2018
(51) Int. Cl.: C23C 18/12, B64G 1/22, C23C 28/04

(54) **METHOD FOR PROTECTING A COMPONENT USED IN AEROSPACE TECHNOLOGY FROM DAMAGE BY ELECTROMAGNETIC RADIATION AND/OR PARTICLE BOMBARDMENT AND COMPONENT OBTAINABLE ACCORDING TO SAID METHOD**

(71) Applicant: CeraNovis GmbH, 66117 Saarbrücken (DE)
(72) Inventor: Butenko, Yuriy, 2313 SR Leiden (NL); Faber, Stefan, 66133 Saarbrücken (DE); Herzog, Manuel, 66440 Blieskastel (DE); Martins, Ricardo, 2316 ZN Leiden (NL); Meyer, Frank, 66386 St. Ingbert (DE); Semprimoschnig, Christopher, 2241 RT Wasssenaar (NL)
(74) Representative: Patentanwaltskanzlei Cartagena

(57) **Abstract**

In a method for protecting a component used in aerospace technology from damage by electromagnetic radiation and/or particle bombardment a sealing material is applied onto a surface of the component, which contains particles in colloidal form which release water under heating and thereby combine to form a closed layer on the surface. The protected component has a closed, pore free layer on the surface, which protects the surface from contamination by carbon containing compounds.

## Description

The invention relates to a method for protecting a component used in aerospace technology from damage by electromagnetic radiation and/or particle bombardment and a component available according to this method.

The coating of technical surfaces is becoming increasingly important. Coatings are used on an industrial scale as protective layers for a wide variety of substrates. The substrate materials mainly comprise polymers, glass, ceramics and above all metal.

In the aerospace industry coatings are used to protect aerospace components from environmental influences and to ensure the function of the component in space for a longer period of time. Typical substrate materials in aerospace technology include aluminum and its alloys, titanium and its alloys and carbon-reinforced polymers. Components consisting of such materials can be protected by white or transparent thermal coating layers with a low solar absorptance value (absorptivity between 200 and 2500 nm) and such protection layers for spacecraft need to avoid degradation by electromagnetic radiation as well as particle radiation in space. The coating layers are intended in particular to dissipate or diffusely reflect environmental influences, radiation effects and radiant heat away from the component.

Coatings for spacecraft such as a space probe or a satellite are preferably applied by spraying, thermal spraying, reactive blasting, CVD, PVD or plasma coating. The produced coating layers typically have a layer thickness between 1 and 1000 µm. Often, they have an open porosity between 0.1 and 60 %., depending on the intended use, and usually consist of a ceramic, a glass and/or a silicon compound. They must be temperature stable (in the region from -196 °C to +550 °C) and resistant to electromagnetic radiation, particle bombardment and possibly vacuum or a combination of two or more of these factors.

Coating layers for spacecrafts preferably consist of aluminum oxide, water glass (in particular potassium, lithium or sodium water glass) and optionally of hexagonal boron nitride, aluminum titanate, titanium dioxide, zirconium dioxide, glasses, glass frits, especially low-melting phosphate glasses and other ceramic fillers, especially silicon compounds, oxides, nitrides and carbides. To improve conductivity, they may contain conductive oxides such as ITO (indium tin oxide), ATO (antimony tin oxide), AZO (aluminum tin oxide), i.e. so-called TCOs (transparent conducting oxides), beyond their percolation threshold. Examples of coatings suitable for spacecrafts are found in WO 2012/107269 A1 or in EP 2 808 422 A2.

The coating layers known from WO 2012/107269 A1 or in EP 2 808 422 A2 are typically characterized by a low carbon content, which is less than 5% and preferably < 1% in the cured state. As a result, they do not emit gases under vacuum and/or temperature, do not carbonize, do not decompose and do not form volatile, condensable compounds.

However, in particular when the layers contain reactive coating components such as hydroxyl groups, they are
- hygroscopic,
- tend to electrically charge,
- and/or have a roughness (Rz > 1 pm),
- and/or have a porosity above 1%,
and importantly they also tend to soil. They absorb contaminants from the air, such as dust, skin particles, hair, dandruff, particles, organic molecules, solvent molecules, monomers and other airborne contaminants. They are also susceptible to fingerprints and outgassing products of polymers, which can be irreversibly bound in layers.

These contaminants, especially if they contain organic carbon-based components, are susceptible to non-oxidative decomposition under UV/VUV and/or temperature and/or vacuum loading, forming a dark, very thin layer of carbon or other solid decomposition products. As a consequence, the solar absorptance value of a contaminated coating layer can rise unacceptably high. A high solar absorptance value can cause an undesired strong heating of the underlying component under irradiation.

In DE 10 2013 010 501 A1 it is shown that it is possible to clean a molecularly or macroscopically contaminated, porous layer with very small amounts of ozone from a transportable ozone generator. The cleaning effect is proven to last for several days, i.e. there is subsequent protection against renewed molecular and macroscopic contamination of the previously cleaned sample. It is presumed that the ozone penetrates into the pores and becomes entangled in the pores. There it can react by oxidizing a contamination species such as a carbon compound.

Although cleaning with ozone has led to acceptable results, it is time-consuming and might not prevent recontamination.

A technical solution would be desirable that avoids contamination and does not remove it only after it has arisen.

This object is achieved by the method having the features of claim 1 and by the component having the features of claim 8. Preferred embodiments of the method and the component are specified in dependent claims.

The method according to the invention serves to protect a component used in aerospace technology from damage by electromagnetic radiation and/or particle bombardment. In each case, it comprises the following step of
a. applying a sealing material onto a surface of the component, which contains particles in colloidal form which release water under heating and thereby combine to form a closed layer on the surface.

It has been found that a closed layer formed from such colloidal particles has excellent contamination repellent properties. A surface sealed with the layer shows clear improvement with regard to the susceptibility to organic, molecular contamination. In tests, an increase in the solar absorption upon irradiation by UV/VUV in vacuum could be reduced significantly in the presence of representative contamination sample.

In a preferred embodiment, the method according to the invention comprises the immediate following additional two steps a. and b.:
a. Applying a base coating to a surface of the component - prior to the application of the sealing material - to form a porous base layer, and
b. sealing the pores of the base layer by applying the sealing material onto the porous base layer to form a top layer on the base layer, followed by the heating, to seal the pores by forming a closed top layer.

So, preferably the method according to the invention includes the formation of a two-layer system consisting of a porous base layer and a closed top layer.

Both, the sealing material and the base coating, can be applied to the surface of the component by conventional methods such as spraying, dipping, flooding, etc. Application by spraying is preferred, especially by low-pressure spraying. By adjusting the viscosity of the composition and the spraying parameters (pressure, material flow and distance to the substrate) and the solids content, defined layer thicknesses can be achieved.

The term "particles in colloidal form" preferably means particles which have diameters between 1 nm and 1000 nm, preferably between 1 nm and 500 nm, and which are suspended in a suspending agent.

In a further preferred embodiment, the method according to the invention is characterized by at least one of the immediately following additional features a. to e.:
a. The sealing material is a suspension of the particles.
b. The suspension contains water as suspending agent.
c. The suspension contains an alcohol, especially butyl glycol or isopropanol, as suspending agent.
d. The suspension has a solids content in the range from 0.1 to 40 wt.-%, preferably in the range from 1 to 10 wt.-%.
e. The suspension is stabilized by an acid.

Preferably, at least features a., b. and d. are combined in preferred embodiments. In even more preferred embodiments features a., b. and d. are combined together with at least one of features c. and e.

It is preferred, that the method according to the invention is further characterized by at least one of the immediately following additional features a. to e.:
a. The particles of the sealing material are formed in solution, preferably by a sol-gel process.
b. The particles of the sealing material comprise hydroxyl groups which may undergo condensation reactions.
c. The particles of the sealing material consist of a material selected from the group consisting of AlO(OH) (boehmite), ZrO₂, SiO₂ and hydrolysate of at least one silicic acid ester.
d. The particles have an average particle size (d50) in the range from 1 nm to 500 nm.
e. The particles have a d90 value in the range from 500 nm to 2500 nm.

Preferably, at least features a., b. and d. are combined in preferred embodiments. In even more preferred embodiments features a., b. and d. are combined together with the AlO(OH) or SiO₂ variant according to c.

For the sake of clarity, of course it is also possible to use suspensions comprising particles of different chemical composition, for example boehmite particles in combination with SiO₂ particles.

As outlined above, the particles in colloidal form which are used according to the invention release water under heating. The water may be at least partially crystal water which can be expelled by the heating, preferably however the water is released as product of a condensation reaction. Particles which are formed in solution, in particular by said sol-gel process, usually have hydroxyl groups on their surfaces. Under heat treatment hydroxyl groups of different particles can undergo condensation reactions. As a consequence, the particles bind to each other and form said closed layer.

Usually, a layer formed of these particles has a glass like structure and does not show porosity. Therefore, it is particularly suitable to seal the pores of the top layer.

It is further preferred, that the method according to the invention is further characterized by at least one of the immediately following additional features a. to d.:
a. The base coating is a composition comprising particles with a layer lattice structure, in particular hexagonal boron nitride, inorganic particles which are transparent or white, an inorganic binder and a suspending agent.
b. The base coating is applied to the surface of the component, thereby forming the base layer, followed by a drying step for removal of the suspending agent.
c. The base coating is applied in a wet film thickness in the range from 5 µm to 100 µm onto the surface of the component.
d. The drying is followed by a heat treatment at a temperature in the range from 200 °C to 600 °C, preferably in the range from 400 °C to 600 °C, or the drying takes place as part of such heat treatment.

It is most preferred that the base layer is prepared as disclosed in WO 2012/107269 A1 or in EP 2 808 422 A2. Accordingly, in addition or as an alternative to boron nitride particles, particles with a layer lattice structure like layered silicate, in particular a layered silicate from the group containing mica, vermiculite and montmorillonite, can also be used.

Inorganic transparent or white particles are particles which show a white color or transparency in the visible range of the electromagnetic spectrum. In particular, they are used to produce optical whiteness in the layer. Preferably the inorganic particles have a Mohs hardness of at least 6. The inorganic transparent or white particles are preferably different from the particles with the layer lattice structure, even if the latter, for example in the case of mica, can be transparent or white.

Preferably, the inorganic particles are at least one member from the group consisting of aluminium titanate particles, zirconium dioxide particles and aluminium oxide particles, the latter especially in its modification corundum.

As transparent particles, for example, particles of high-melting glass, preferably with a melting point > 600 °C, in particular > 800 °C, can be used.

The inorganic transparent or white particles preferably have a refractive index of n > 1.6.

The suspending agent is preferably water and/or an alcohol, especially butyl glycol, isopropanol, n-propanol or ethanol.

The inorganic binder is preferably a glass former, in particular a glass former, which can be processed at room temperature in water. Glass formers that can be processed in water are generally well known. They are usually defined as being least partially soluble in water at room temperature and being capable of forming a glass-like matrix after removal of the water and heating, if necessary melting.

More preferably the binder comprises a water glass or a phosphate glass or is a water glass or a phosphate glass. A water glass is a water-soluble alkali silicate solidified from the melt flow, especially a potassium or sodium silicate, or their aqueous solutions. Phosphate glasses have a [PO₄] tetrahedron as a basic element. Phosphate glasses are often highly hygroscopic and often dissolve at least partially in water.

For drying, in the simplest case, the base layer can simply be left to rest at room temperature. Drying can be carried out in a separate step but also within the framework of the heat treatment. The heat treatment can be conducted, for example, in a sintering furnace. The treatment can be carried out in air, in a vacuum or under an inert gas atmosphere. If necessary, oxygen-free work can be carried out at the beginning and an oxygen exposure at the end of the treatment.

Preferably the heat treatment follows the drying process as a separate step. For drying, the substrate coated with the composition can also be heated, for example to a temperature between 30 °C and 120 °C, especially in a circulating air drying cabinet or by IR radiation.

The aim of the drying is in particular to remove the suspending agent contained in the base layer as completely as possible. Heat treatment, on the other hand, aims to achieve structural hardening of the base layer on the surface of the component, if necessary by converting the components contained in the composition into a new chemical compound.

The base coating preferably contains the following components in the following proportions:
- The inorganic binder in a proportion between 10 wt.-% and 30 wt.-%, preferably between 15 wt.-% and 25 wt.-%.
- The inorganic transparent or white particles in a proportion between 40 wt.-% and 70 wt.-%, preferably between 50 wt.-% and 60 wt.-%.
- The particles with the layer lattice structure, in particular the hexagonal boron nitride, in a proportion between 2% and 10% by weight, preferably between 4% and 7% by weight.
- The suspending agent in a proportion between 10 wt.-% and 40 wt.-%, preferably between 15 wt.-% and 25 wt.-%.

The above percentages add up to 100% by weight. It should be noted that the inorganic binder itself may contain a proportion of solvent, e.g. water when using a water glass as a binder. In this case, the proportion of component (4) in the composition may be 0.

In a preferred embodiment, the method according to the invention comprises the immediate following additional step a.:
a. The sealing material is applied onto the base layer after the base layer has been subjected to the drying and/or after the base layer has been subjected to the heat treatment.

In a further preferred embodiment, the method according to the invention comprises at least one of the immediate following additional steps a. to c.:
a. The sealing material is applied in a wet film thickness in the range from 0.1 µm to 20 µm onto the surface of the component or onto the base layer.
b. After application of the sealing material, the closed layer or the closed top layer is dried to remove any suspending agent.
c. The drying of the closed layer or the closed top layer is followed by a heat treatment at a temperature in the range from 200 °C to 600 °C, preferably in the range from 400 °C to 600 °C or the drying takes place as part of such heat treatment.

Preferably, all features a. to c. are combined in preferred embodiments.

The drying step and the heat treatment of the closed layer or the closed top layer can be conducted like the drying and the heat treatment of the base layer.

The aerospace component of the invention which is protected against damage by electromagnetic radiation and/or particle bombardment is characterized in each case by the following two features:
a. The component has a closed, pore free layer on a surface, and
b. the pore free layer has been formed according to the method described above.

The pore free layer protects the surface from contamination by carbon containing compounds. It is even possible to clean the surface, for example with a dust cloth.

In preferred embodiments, the component is characterized by at least one of the immediate following features a. to c.:
a. The component has a porous, inorganic base layer on the surface, and
b. the pore free layer is deposited as top layer on the base layer, and
c. the top layer seals the pores of the base layer.

It is particularly preferred, that the component is characterized by a combination of features a. to c..

The component to be protected is usually a metallic substrate used in the aerospace industry. In particular, these are substrates made of aluminium or a high-temperature-resistant aluminium alloy (e.g. Alloy 6082, Dispal®), titanium or a high-temperature-resistant titanium alloy (e.g. TiAl₆V₄) or a fibre-reinforced material (e.g. a composite material made of carbon fibres and silicon carbide). Substrates made of niobium or niobium alloy, steel, glass, quartz or ceramics are also particularly suitable.

A description of the basic features of the base layer is found in WO 2012/107269 A1 or in EP 2 808 422 A2. One of the most important features of the base layer is its porosity.

Porosity is defined as the ratio of pore volume to total volume of the layer. For skilled persons an adjustment of the porosity in this ranges is a routine measure. The decisive parameters for this are in particular the selection of a suitable binder, the temperature during heat treatment as well as the type and size of both the inorganic particles and the particles with the layer lattice structure and their ratio.

In contrast to the layers described in WO 2012/107269 A1 or in EP 2 808 422 A2 according to this invention the pores of the base layer are sealed by the top layer. As already mentioned, the top layer preferably has a glass like structure and does not show porosity.

Preferably the top layer consists of ZrO₂, SiO₂ or Al₂O₃ or mixtures thereof.

In further preferred embodiments, the component is characterized by at least one of the immediate following features a. to c.:
a. The base layer has a thickness in the range from 5 µm to 50 µm.
b. The base layer has a porosity of at least 10 %, preferably a porosity in the range from 10 % to 70 %, in particular in the range from 30 % to 45 %.
c. The top layer has a thickness in the range from 0,1 µm to 10 µm.

It is preferred that the base layer and the top layer each are essentially free of organic and/or silicone-based components. Essentially free of means that the proportion of organic and/or silicone-based components is less than 0.5% by weight, preferably less than 0.3% by weight, in particular less than 0.1% by weight (in each case based on the total weight of the layers).

Preferably, the component is part of a spacecraft such as a space probe or a satellite. The component may consist of a metal or a metal alloy or of a polymers or of ceramic or of carbon enforced polymers.

Further features and advantages of the invention can be derived from the following detailed description of preferred embodiments. The preferred embodiments described are merely for the purposes of illustration and to give a better understanding of the invention and shall not in any way constitute a restriction.

### Examples

### (1) Preparation of a base layer

A base coating in the form of an aqueous suspension consisting of an aqueous alumina suspension, an aqueous boron nitride suspension and potassium silicate was sprayed onto a sandblasted and purified Ti64 (TiAl₆V₄) substrate. The resulting base layer was solidified by heat treatment for one hour at 500 °C; an average layer thickness of 25 µm was then measured at a porosity of 35 % (BET surface area of 5 g/m²) with a Rz roughness between 10 and 15 µm. The solar absorptance value of the absorptivity was 0.17 on average for this layer thickness.

### (2) Comparative contamination test

For testing purposes the coated substrate was wrapped in polymerized polyethylene film in a drying oven at 40 °C for several weeks. Small amounts of the plasticizer (paraffin, phthalates, etc.) penetrated into the pores of the base layer. In a next step the substrate was exposed to high vacuum < 10⁻⁵ mbar and at 480 °C. After a few hours black spots (consist of carbon clusters) visible to the naked eye formed on the layer. The solar absorptance value increased on average by approx. 40 % to approx. 0.25.

### (3) Production of a boehmite suspension as a sealing material

950 g of demineralized water were placed in a suitable container, then 50 g of an agglomerated boehmite powder was added. The resulting suspension was stirred for at least 12 hours and filtered using a 10 µm filter. The resulting suspension had a solids content of approx. 4.5% by weight and a pH value of 5. It contained boehmite particles with an average particle size (d50) of approx. 200 nm. The low pH value is partly due to an acid in the boehmite powder, which stabilizes the colloidal boehmite particles in the suspension.

### (4) Application of the boehmite suspension / formation of a two-layer system

The sol was sprayed onto the base layer to form a top layer with a layer thickness in the range of 1 to 3 µm. Afterwards, the substrate and the layers were slowly heated to a temperature of 500 °C for a period of 5 hours. The resulting top layer was transparent and covered the base layer completely.

### (5) Application of a ZrO₂ suspension / formation of a two-layer system

An aqueous Zr02 suspension (d50 value in the range from 60-100 nm; d90 value in the range from 100-160 nm; solids content in the range from 5 to 30 %) was sprayed onto the base layer to form a top layer with a layer thickness in the range of 1 to 3µm. Afterwards, the substrate and the layers were slowly heated to a temperature of 500 °C for a period of 5 hours. The resulting top layer was transparent and covered the base layer completely.

### (6) Application of a Si02 suspension / formation of a two-layer system

Si02 particles suspended in isopropanol (d50 value in the range from 40-50 nm; solids content of about 5 weight %) was sprayed onto the base layer to form a top layer with a layer thickness in the range of 1 to 3 µm. Afterwards, the substrate and the layers were slowly heated to a temperature of 500 °C for a period of 5 hours. The resulting top layer was transparent and covered the base layer completely.

### (7) Preparation / Application of an alkaline silane hydrolysate / formation of a two-layer system

1500 ml methyltriethoxysilane (MTEOS), 430 ml tetraethoxysilane (TEOS) and 48 g sodium hydroxide (NaOH) were mixed and stirred overnight at room temperature. Slowly 192 ml water were added to the resulting light yellow solution, thereby ensuring that the solution did not become too hot (< 25 °C).

After dilution with Butylglycol and isopropanol the resulting alkaline silane hydrolysate was sprayed onto the base layer to form a top layer with a layer thickness in the range of 1 to 3 µm. Afterwards, the substrate and the layers were slowly heated to a temperature of 500 °C for a period of 5 hours. The resulting top layer was transparent and covered the base layer completely.

### (8) Application of a colloidal water glass / formation of a two-layer system

A colloidal water glass (solids content in the range from 5 to 20 %) was sprayed onto the base layer to form a top layer with a layer thickness in the range of 1 to 3 µm. Afterwards, the substrate and the layers were slowly heated to a temperature of 500 °C for a period of 5 hours. The resulting top layer was transparent and covered the base layer completely.

### (9) Radiation induced Contamination tests 1 and 2

The substrates with two-layer systems obtained according to examples (4) to (8) were tested (test-1 and test-2) for their tendencies to contaminate according to a recent test approach developed by ESA [C.O.A. Semprimoschnig, Yu.V. Butenko, A.W. Polsak, R. Rampini, P. de Heij, B. Bras, R. Martins, L. Levan, and V. Cesar-Auguste "An Overview of the latest Materials Engineering Challenges for the preparation of ESA's Mercury Mission", ISMSE-13, the 13th International Symposium on Materials in the Space Environment, Pau, France, 22-26 June 2015]. It is observed that in each case the increase of the solar absorptance values was significantly lower for sealed samples compared to that of the pristine samples (see description of the test 1 and 2 below).

### Comparative test 1

During the test 1 samples of pristine coating and samples sealed with SiO₂ and Al₂O₃ containing sealants were exposed to a flux of organic contamination combined with UV/VUV radiation (8.5±2.0 SC (solar constants)). Test 1 was conducted in two steps: (1) first a cold step at -50°C, for 162 hours; and (2) a second hot step at 250°C for 140 hours. Surfaces of samples were exposed to the contamination fluxes equal to 1.9x10⁻⁴ g/cm² in the first step and 1.6x10⁻⁴ g/cm² in the second step. Results of the test showed that values of solar absorptance (alpha, absorptivity between 200 and 2500 nm) changed from 0.20 at the beginning of test to 0.51-0.53 at the end of the test for the pristine samples; samples sealed by Si02 showed less degradation of the alpha values: from 0.12 at the beginning of the test to 0.24-0.29 at the end of the test; the lowest change in alpha values was observed for samples sealed by Al₂O₃: from 0.12 at the beginning of the test to 0.19 at the end of the test.

### Comparative test 2

During test 2 samples of pristine coating and samples sealed with Al₂O₃ containing sealants were exposed to a flux of organic contamination combined with UV/VUV radiation ranging from 1 to 10 SC depending on the step profile of the test. Test-2 was conducted in 26 steps during a duration of 1.5 years. During this test the temperatures of samples were varied from -50°C to 311°C. Surfaces of samples were exposed to the total contamination flux of 0.62x10⁻⁴ g/cm² by the end of the test. Results of the test showed that values of solar absorptance (alpha, absorptivity between 200 and 2500 nm) changed from 0.20-0.23 at the beginning of test to 0.70-0.72 at the end of the test for the pristine samples; lower change in alpha values was observed for samples sealed by Al2O3: from 0.14 at the beginning of the test to 0.31-0.36 at the end of the test.

## Claims

1. Method for protecting a component used in aerospace technology from damage by electromagnetic radiation and/or particle bombardment, comprising the step of
a. applying a sealing material onto a surface of the component, which contains particles in colloidal form which release water under heating and thereby combine to form a closed layer on the surface.

2. Method according to claim 1, comprising the following additional steps:
a. applying a base coating to a surface of the component - prior to the application of the sealing material - to form a porous base layer, and
b. sealing the pores of the base layer by applying the sealing material onto the porous base layer to form a top layer on the base layer, followed by the heating, to seal the pores by forming a closed top layer.

3. Method according to claim 1 or claim 2, **characterized by** at least one of the following additional features:
a. The sealing material is a suspension of the particles.
b. The suspension contains water as suspending agent.
c. The suspension contains an alcohol, especially butyl glycol or isopropanol as suspending agent.
d. The suspension has a solids content in the range from 0.1 to 40 wt.-%.
e. The suspension is stabilized by an acid.

4. Method according to one of the preceding claims, **characterized by** at least one of the following additional features:
a. The particles of the sealing material are formed in solution, preferably by a sol-gel process.
b. The particles of the sealing material comprise hydroxyl groups which may undergo condensation reactions.
c. The particles of the sealing material consist of a material selected from the group consisting of AlO(OH) (boehmite), ZrO₂, SiO₂ and hydrolysate of at least one silicic acid ester.
d. The particles have an average particle size (d50) in the range from 1 nm to 500 nm.
e. The particles have a d90 value in the range from 500 nm to 2500 nm.

5. Method according to one of claims 2 to 4, **characterized by** at least one of the following additional features:
a. The base coating is a composition comprising particles with a layer lattice structure, in particular hexagonal boron nitride, inorganic particles which are transparent or white, an inorganic binder and a suspending agent.
b. The base coating is applied to the surface of the component, thereby forming the base layer, followed by a drying step for removal of the suspending agent.
c. The base coating is applied in a wet film thickness in the range from 5 µm to 100 µm onto the surface of the component.
d. The drying is followed by a heat treatment at a temperature in the range from 400 °C to 600 °C or the drying takes place as part of such heat treatment.

6. Method according to claim 5, **characterized by** the following additional feature:
a. The sealing material is applied onto the base layer after the base layer has been subjected to the drying and/or after the base layer has been subjected to the heat treatment.

7. Method according to one of the preceding claims, **characterized by** at least one of the following additional features:
a. The sealing material is applied in a wet film thickness in the range from 0.1 µm to 20 µm onto the surface of the component or onto the base layer.
b. After application of the sealing material, the closed layer or the closed top layer is dried to remove any suspending agent.
c. The drying of the closed layer or the closed top layer is followed by a heat treatment at a temperature in the range from 400 °C to 600 °C or the drying takes place as part of such heat treatment.

8. Aerospace component protected against damage by electromagnetic radiation and/or particle bombardment, **characterized by** the following features:
a. The component has a closed, pore free layer on a surface, and
b. the pore free layer has been formed according to the method according to one of the preceding claims.

9. Component according to claim 8, **characterized by** the following additional features:
a. The component has a porous, inorganic base layer on the surface, and
b. the pore free layer is deposited as top layer on the base layer, and
c. the top layer seals the pores of the base layer.

10. Component according to claim 8 or claim 9, **characterized by** at least one of the following additional features:
a. The base layer has a thickness in the range from 5 µm to 50 µm.
b. The base layer has a porosity of at least 10 %, preferably a porosity in the range from 10 % to 70 %, in particular in the range from 30 % to 45 %.
c. The top layer has a thickness in the range from 0.1 µm to 10 µm.

11. Component according to one of claims 8 to 10, **characterized by** at least one of the following additional features:
a. The component is part of a spacecraft such as a space probe or a satellite.
b. The component consists of a metal or a metal alloy or of a plastics or of ceramic or of carbon enforced polymers.
